(19) Europäisches Patentamt
European Patent Office
Office européen des brevets

(11) **EP 2 025 713 A1**

(12) **EUROPEAN PATENT APPLICATION**
published in accordance with Art. 153(4) EPC

(43) Date of publication:
**18.02.2009 Bulletin 2009/08**

(51) Int Cl.:
**C08L 67/04** *(2006.01)*

(21) Application number: **07744462.8**

(22) Date of filing: **31.05.2007**

(86) International application number:
**PCT/JP2007/061051**

(87) International publication number:
**WO 2007/142106 (13.12.2007 Gazette 2007/50)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **02.06.2006 JP 2006154788**

(71) Applicant: **UNITIKA LTD.**
**Amagasaki-shi,**
**Hyogo 660-0824 (JP)**

(72) Inventors:
• **INUI, Yukiko c/o UNITIKA LTD.**
**Kyoto 611-0021 (JP)**
• **HASHIMOTO, Masanori c/o UNITIKA LTD.**
**Kyoto 611-0021 (JP)**
• **YOSHIDA, Masahiro c/o UNITIKA LTD.**
**Kyoto 611-0021 (JP)**

(74) Representative: **Pautex Schneider, Nicole Véronique et al**
**Novagraaf International SA**
**25, avenue du Pailly**
**1220 Les Avanchets - Geneva (CH)**

(54) **POLYLACTIC ACID HEAT-RESISTANT SHEET**

(57) Disclosed is a polylactic acid based heat-resistant sheet suitable for molding. The polylactic acid based heat-resistant sheet containing 50 to 95% by mass of a polylactic acid and 5 to 50% by mass of a polylactic acid-based copolymer which contains 30 to 70 % by mole of a lactic acid component. The polylactic acid based heat-resistant sheet has a crystallization peak temperature of 60 to 120°C, a heat quantity of crystallization of 10 to 25 J/g, a melting point of 160°C or higher and a heat quantity of crystal fusion of 15 to 40 J/g, as measured with a differential scanning calorimeter at a temperature increase rate of 20°C/min.

**Description**

Technical Field

The present invention relates to a polylactic acid based heat-resistant sheet, in particular, a polylactic acid based heat-resistant sheet suitable for molding.

Background Art

In these years, as the social demand for environmental conservation is increasing, biodegradable polymers decomposable with microorganisms or the like are attracting attention. Specific examples of biodegradable polymers may include the following melt-moldable polyesters: aliphatic polyesters such as polybutylene succinate, polycaprolactone and polylactic acid; and aliphatic-aromatic copolyesters such as terephthalic acid/1,4-butanediol/adipic acid copolymer. Among these aliphatic polyesters, polylactic acid, widely distributed in nature and harmless to plants and animals or man and beast, has a melting point of 140 to 175°C so as to have a sufficient heat resistance, and is expected as a relatively inexpensive, thermoplastic biodegradable resin.

However, polylactic acid has a problem that its crystallization rate is relatively slow. In a conventional extrusion molding of polylactic acid into a sheet, polylactic acid crystals have been completely melted by the heating to fluidize the polymer, then the sheet is produced by cooling the extruded polymer with chill rolls. When the sheet thus produced is heat molded into articles such as containers, the crystallization of polylactic acid does not progress to a sufficient extent during the concerned process. Consequently, the molded articles thus obtained are poor in heat resistance.

Accordingly, for the purpose of imparting heat resistance to the molded articles made of polylactic acid, there have been reported a large number of methods for crystallization through heat treatment or/and stretching orientation.

For example, as a method of crystallization based on heat treatment, for example, JP2003-253009A has proposed a production method in which a crystal nucleating agent such as talc is added to polylactic acid to prepare a sheet having a fast crystallization rate, and molding is conducted with a heated mold in a short time by using the sheet thus obtained. Additionally, for example, JP9-278991A has proposed a method in which added is a so-called transparent nucleating agent such as an aliphatic carboxylic acid amide, an aliphatic carboxylic acid salt, an aliphatic alcohol or an aliphatic carboxylic acid ester.

However, in the method described in JP2003-253009A, even a sheet before molding is low in transparency; additionally, when molding is applied, workability is satisfactory with a resin component singly composed of polylactic acid, but when another flexible biodegradable polymer is blended for the purpose of improving the impact resistance, the time of a molding cycle is required to be increased by a factor of a few, and hence no practical workability is attained. The sheet obtained by the method of JP9-278991A is high in transparency before molding, but is decreased in transparency by crystallization, additionally requires a long heat treatment time for crystallization, and hence is poor in practicability.

As a method of crystallization through stretching orientation, there have been proposed a method in which a certain stretching is conducted before molding (JP2001-162676A), and a method in which the above-described transparent nucleating agent and the above-described stretching orientation are used in combination (JP2003-345150A). However, the sheet of JP2001-162676A is more difficult to mold than the unstretched sheet, in particular, difficult to subject to deep-draw molding; additionally, the residual strain of the molded article obtained from the sheet of JP2001-162676A is large, and hence the molded article is disadvantageously deformed at the temperatures of the glass transition temperature or higher. The technique of JP2004-345150A improves the crystallization rate on the basis of the combination of the use of a crystal nucleating agent and the application of the stretching orientation in molding so as to maintain the transparency after crystallization. However, in general, the stretching magnification is significantly varied from portion to portion of the molded article, and hence it is difficult, particularly in a low magnification molded article, to increase the heat resistance of the whole molded article.

An object of the present invention is to solve the above-described problems and to provide a polylactic acid based heat-resistant sheet excellent in transparency and heat resistance, in particular, suitable for molding applications.

Disclosure of the Invention

The present inventors have made a diligent study for the purpose of solving the above-described problems, and consequently have reached the present invention. Specifically, the polylactic acid based heat-resistant sheet of the present invention includes 50 to 95% by mass of a polylactic acid and 5 to 50% by mass of a polylactic acid copolymer containing 30 to 70 % by mole of a lactic acid component. The polylactic acid based heat-resistant sheet has a crystallization peak temperature of 60 to 120°C, a heat quantity of crystallization of 10 to 25 J/g, a melting point of 160°C or higher and a heat quantity of crystal fusion of 15 to 40 J/g, as measured with a differential scanning calorimeter at a temperature increase rate of 20°C/min.

According to the present invention, there can be provided a polylactic acid based heat-resistant sheet which is suitable for molding, can be crystallized by heating during a practical molding cycle time without stretching the polylactic acid based heat-resistant sheet, and is excellent in the transparency and the heat resistance after crystallization.

Best Mode for Carrying Out the Invention

Hereinafter, the present invention is described in detail.

The polylactic acid based heat-resistant sheet of the present invention includes 50 to 95% by mass of a polylactic acid and 5 to 50% by mass of a polylactic acid-based copolymer.

As the above-described polylactic acid, there can be used poly-L-lactic acid, poly-D,L-lactic acid that is a copolymer between L-lactic acid and D-lactic acid, or a mixture of these. As for the mixture, the melting point of the sheet is preferably 160°C or higher. When the melting point is lower than 160°C, the sheet is poor in heat resistance as the case may be.

The melting point of the polylactic acid is varied depending on the copolymerization ratio between L-lactic acid and D-lactic acid; with increasing content of D-lactic acid, the crystallinity of the polylactic acid itself is decreased and the melting point thereof is decreased. For the purpose of setting the melting point of the mixture at 160°C or higher, it is necessary to adopt as the main component a polylactic acid having a content of D-lactic acid of 2% by mole or less. By partially mixing a substantially amorphous polylactic acid having a content of D-lactic acid of 10% by mole or more with a polylactic acid having a content of D-lactic acid of 2% by mole or less, the crystallization degree and the crystallization rate of the mixture can be controlled while the melting point of the mixture is being maintained at 160°C or higher. Accordingly, this technique is effective as a technique for obtaining a desired crystallinity.

It is known that the residual lactide present in the polylactic acid promotes the hydrolysis of the polylactic acid when the amount of the residual lactide is too large. However, lactide having a low molecular weight is more easily crystallized than the polylactic acid having a large molecular weight, and hence lactide functions as a crystallization initiator to promote the crystallization of the polylactic acid. Accordingly, in the present invention, the residual lactide amount in the polylactic acid is not particularly limited, but preferably falls in a range from 0.1 to 0.6% by mass for the purpose of promoting the crystallization and imparting the heat resistance to the molded article. When the residual lactide amount is less than 0.1% by mass, the function as the crystallization initiator to promote the crystallization of the polylactic acid cannot be sufficiently attained. On the other hand, when the residual lactide amount exceeds 0.6% by mass, the crystallization is promoted, but the function to promote the hydrolysis is also enhanced and hence the polylactic acid is biologically decomposed.

The weight average molecular weight of the polylactic acid preferably falls within a range from 150,000 to 300,000, and more preferably from 160,000 to 200,000. When the weight average molecular weight of the polylactic acid is less than 150,000, the melt viscosity of the polylactic acid is too low, and the obtained sheet tends to be poor in mechanical strength. When the weight average molecular weight exceeds 300,000, the melt viscosity of the polylactic acid is too high and the melt extrusion tends to be difficult.

The polylactic acid-based copolymer forming the polylactic acid based heat-resistant sheet of the present invention is required to contain 30 to 70% by mole of the lactic acid component. When the content of the lactic acid component is less than 30% by mole, the compatibility of the polylactic acid-based copolymer with the polylactic acid is poor, and it is difficult to obtain a transparent sheet. On the other hand, when the content of the lactic acid component exceeds 70% by mole, the effect to accelerate the crystallization rate of the polylactic acid is small, the heat treatment time required for crystallization comes to be long, and hence the polylactic acid based heat-resistant sheet comes to be poor in practicability and also in the transparency when crystallized.

The copolymerization component other than the lactic acid component is preferably a polyester composed of a dicarboxylic acid and a diol or is preferably a polyether.

The dicarboxylic acid component is not particularly limited; however, examples of the dicarboxylic acid component include: dicarboxylic acids such as oxalic acid, succinic acid, adipic acid, sebacic acid, azelaic acid, dodecanedioic acid, dimer acid, terephthalic acid, isophthalic acid, phthalic acid, 2,6-naphthalenedicarboxylic acid, sodium 5-sulfoisophthalate, maleic anhydride, maleic acid, fumaric acid, itaconic acid, citraconic acid, mesaconic acid and cyclohexanedicarboxylic acid; and 4-hydroxybenzoic acid and ε-caprolactone. From the viewpoint of the compatibility with the polylactic acid, preferable are dicarboxylic acids having 10 or less carbon atoms.

Examples of the diol component include: ethylene glycol, diethylene glycol, 1,2-propylene glycol, 1,3-propanediol, 1,4-butanediol, 1,5-pentanediol, neopentyl glycol, 1,6-hexanediol, cyclohexane dimethanol, triethylene glycol, polyethylene glycol, polypropylene glycol, polytetramethylene glycol, and ethylene oxide adducts of bisphenol A, and ethylene oxide adducts of bisphenol S.

Examples of the polyether component include: polyethylene glycol, polypropylene glycol and polytetramethylene glycol. The weight average molecular weight of the polyether is preferably 200 to 5000. By copolymerizing a polyether component having a specific weight average molecular weight, flexibility can be imparted to the polylactic acid without degrading the compatibility with the polylactic acid.

The polylactic acid-based copolymer may further include, in small amounts, trifunctional compounds and the like such as trimellitic acid, trimesic acid, pyromellitic acid, trimethylolpropane, glycerin and pentaerythritol. Two or more of these components may be used in combination.

The polylactic acid-based copolymer is preferably crystalline and has a melting point of preferably 130°C or higher, and particularly preferably 140°C or higher. When the melting point is lower than 130°C, the deviation between the crystallization temperature range of the polylactic acid and the crystallization temperature range of the polylactic acid-based copolymer is large and the effect to improve the crystallization rate at the time of the temperature increase is small. Additionally, the heat resistance after the crystallization is poor as the case may be.

Examples of preferable commercially available polylactic acid-based copolymers include Plamate PD-150 and Plamate PD-350 (trade names, manufactured by Dainippon Ink and Chemicals, Inc.)

The polylactic acid based heat-resistant sheet of the present invention is required to include 50 to 95% by mass of a polylactic acid and 5 to 50% by mass of a polylactic acid-based copolymer. When the content of the polylactic acid component is less than 50% by mass, the glass transition temperature and the melting point of the sheet are decreased, and accordingly the handleability of the sheet in an amorphous condition may be poor and the heat resistance of the sheet may be decreased even when crystallized. When the content of the polylactic acid component exceeds 95% by mass, the effect to improve the crystallization rate is small, and the practicability of the molding is poor. From this viewpoint, preferably the content of the polylactic acid is 50 to 85% by mass and the content of the polylactic acid-based copolymer is 15 to 50% by mass; more preferably the content of the polylactic acid is 60 to 85% by mass and the content of the polylactic acid-based copolymer is 15 to 40% by mass.

In the resin composition composing the polylactic acid based heat-resistant sheet of the present invention, a crystal nucleating agent may be contained for the purpose of controlling the crystallization peak temperature, the heat quantity of crystallization and the shortest semi-crystallization time of the resin composition. The addition amount of the crystal nucleating agent preferably falls within a range from 0.1 to 15% by mass where the amount of the whole resin composition is 100% by mass. When the addition amount is less than 0.1% by mass, the effect as the crystal nucleating agent cannot be sufficiently brought out. When the addition amount exceeds 15% by mass, the content of the crystal nucleating agent becomes too large, and the crystal nucleating agent gives, to the physical properties of the resin composition, adverse effects such that the transparency is degraded and the molded article is brittle.

As for the crystal nucleating agent, the type thereof is not particularly limited; however, the crystal nucleating agent is preferably an amide crystal nucleating agent having at least one hydroxyl group. As the amide crystal nucleating agent, preferable is a crystal nucleating agent which is satisfactory in the compatibility with the polylactic acid and the polylactic acid-based copolymer, enhances the crystallization rate of the polylactic acid and the polylactic acid-based copolymer, and additionally maintains the transparency when the polylactic acid and the polylactic acid-based copolymer are crystallized.

Specific examples of such an amide crystal nucleating agent include the following compounds: ricinoleic acid amide, hydroxystearic acid amide, N-hydroxyethylricinoleic acid amide, N-hydroxyethyl-12-hydroxysteric acid amide, N, N'-ethylene-bis-ricinoleic acid amide, N,N'-ethylene-bis-12-hydroxystearyl amide, N,N'-ethylene-bis-stearic acid amide, N,N'-hexamethylene-bis-ricinoleic acid amide, N,N'-hexamethylene-bis-12-hydroxystearic acid amide and N,N'-xylylene-bis-12-hydroxystearic acid amide. Among these, particularly preferably used are N,N'-ethylene-bis-stearic acid amide, N,N'-hexamethylene-bis-ricinoleic acid amide, N,N'-hexamethylene-bis-12-hydroxystearic acid amide and N,N'-xylylene-bis-12-hydroxystearic acid amide. These amide crystal nucleating agents may be used each alone or in combinations of two or more thereof.

Ricinoleic acid and 12-hydroxystearic acid to serve as the basic ingredients for the preferably used amide crystal nucleating agents are fatty acids obtained by saponification decomposition of castor oil and hence are of plant origin; the use of these acids as well as the use of polylactic acid-based copolymer contributes to the reduction of the consumption amounts of petroleum raw materials.

For the purpose of enhancing the crystallinity of the polylactic acid based heat-resistant sheet of the present invention, the chemical structure of the amide crystal nucleating agent is preferably a symmetric structure. Also for the purpose of enhancing the compatibility of the amide crystal nucleating agent with the polylactic acid and the polylactic acid-based copolymer, the number of the carbon atoms in the amide crystal nucleating agent is preferably 4 to 60.

The addition amount of the amide crystal nucleating agent is preferably 0.1 to 5% by mass, more preferably 0.1 to 2% by mass and furthermore preferably 0.1 to 1% by mass. When the addition amount is less than 0.1% by mass, the effect to promote the crystallization is poor; when the addition amount exceeds 5% by mass, the transparency tends to be impaired or the workability tends to be degraded.

Examples of the crystal nucleating agents composed of organic substances, excellent in the compatibility with the polylactic acid, other than the amide crystal nucleating agents include fatty acid amides such as erucic acid amide, stearic acid amide, oleic acid amide, ethylene-bis-stearic acid amide, ethylene-bis-oleic acid amide and ethylene-bis-lauric acid amide.

In addition to the above-described crystal nucleating agents, examples of the crystal nucleating agent include inorganic substances such as layered silicates typified by talc, smectite, vermiculite and swelling fluorine mica. Among these, talc is an inorganic substance which is highest in the crystallization efficiency for polylactic acid, is extremely low in price and is occurring in nature, and hence talc is industrially advantageous and does not give any load to the global environment.

The average particle size of each of the inorganic crystal nucleating agents preferably falls within a range from 0.1 to 10 $\mu$m. When the average particle size is less than 0.1 $\mu$m, dispersion failure or secondary cohesion is caused, and hence sufficient effects as the crystal nucleating agent are hardly attained. When the average particle size exceeds 10 $\mu$m, the physical properties of the heat-resistant sheet are adversely affected, and consequently the physical properties of the molded body obtained from the heat-resistant resin sheet tend to be adversely affected.

The above-described amide crystal nucleating agent having at least one hydroxyl group, the other organic crystal nucleating agents and the inorganic crystal nucleating agents may be used each alone or in combinations of two or more thereof.

For the purpose of promoting the crystallization rate of the polylactic acid, by concomitantly using, according to need, a crosslinking agent such as an organic peroxide and a crosslinking aid, it is also possible to apply a light degree of crosslinking to the resin composition.

Examples of the crosslinking agent include: organic peroxides such as n-butyl-4,4-bis-t-butylperoxyvalerate, dicumylperoxide, di-t-butylperoxide, di-t-hexylperoxide, 2,5-dimethyl-2,5-di(t-butylperoxy)hexane and 2,5-dimethyl-2,5-t-butylperoxyhexyne-3; polycarboxylic acids such as phthalic anhydride, maleic anhydride, trimethyladipic acid, trimellitic anhydride and 1,2,3,4-butanetetracarboxylic acid; metal salt such as lithium formate, sodium methoxide, potassium propionate and magnesium ethoxide; epoxy compounds such as bisphenol-A diglycidyl ether, 1,6-hexanediol diglycidyl ether, trimethylolpropane triglycidyl ether and terephthalic acid diglycidyl ether; and isocyanate compounds such as diisocyanate, triisocyanate, hexamethylenediisocyanate, 2,4-trilenediisocyanate, 2,6-trilenediisocyanate, xylylenediisocyanate and diphenylmethanediisocyanate.

Examples of the crosslinking aid include trimethacrylate, glycidyl methacrylate, n-butyl methacrylate, hydroxypropyl monomethacrylate and polyethylene glycol monomethacrylate.

In the present invention, in the resin composition forming the sheet, additives such as the following agents may be added according to need within ranges not to impair the properties of the resin composition: an impact resistance improver, a plasticizer, an ultraviolet protecting agent, a light stabilizer, an antifogging agent, an antimisting agent, an antistatic agent, a flame retardant, a color protecting agent, an antioxidant, a filler, a pigment, a release agent, a moisture proofing agent and an oxygen barrier agent. Alternatively, these additives may be applied to the surface of the sheet.

The resin composition composed as described above is extruded in a sheet-like shape to form a sheet. The thickness of the sheet is not particularly limited, but may be appropriately set according to the applications, the required performances or the like. However, the thickness of approximately 150 to 500 $\mu$m is appropriate.

The method of producing the polylactic acid based heat-resistant sheet of the present invention is not particularly limited, and examples of such a method include a T-die method, an inflation method and a calender method. Among these methods, preferable is the T-die method in which a material is melt kneaded and extruded by using a T-die.

When the polylactic acid based heat-resistant sheet of the present invention is produced by means of the T-die method, a polylactic acid resin composition prepared by mixing the polylactic acid and the polylactic acid-based copolymer in appropriate amounts is fed to the hopper of a single screw extruder or a double screw extruder, the extruder is heated, for example, so as for the cylinder temperature to be 180 to 230°C and for the T-die temperature to be 200 to 230°C, the resin composition is melt kneaded, extruded and cooled with a cast roll set to fall within a temperature range from 30 to 50°C, and thus a sheet having a thickness of approximately 150 to 500 $\mu$m can be obtained.

The sheet of the present invention is required to have a crystallization peak temperature of 60 to 120°C, a heat quantity of crystallization of 10 to 25 J/g, a melting point of 160°C or higher and a heat quantity of crystal fusion of 15 to 40 J/g, as measured with a differential scanning calorimeter under a temperature increase condition of 20°C/min.

For the purpose of attaining these properties, specifically, it is essential to regulate the mixing ratio in the polylactic acid between the crystalline polylactic acid and the amorphous polylactic acid, the type of the polylactic acid-based copolymer, and the mixing ratio between the polylactic acid and the polylactic acid-based copolymer, and it is also essential to add a crystal nucleating agent according to need. By heating and stretching the sheet, these properties can also be attained.

When the crystallization peak temperature is lower than 60°C, the sheet is crystallized at the time of heating for softening the sheet, and comes to be poor in moldability as the case may be. On the other hand, when the crystallization peak temperature exceeds 120°C, the crystallization takes too long time, hence a poor practicability of the molding is caused and additionally the sheet tends to be whitened after crystallization. Accordingly, the crystallization peak temperature is preferably set at 60°C to 100°C.

The crystallization peak temperature is a physical property dependent on the compatibility between the polylactic acid and the polylactic acid-based copolymer, the mixing ratio between these two polymers, the molecular weight, the glass transition temperature and the crystallinity of the polylactic acid-based copolymer, and additionally the type and the addition amount of the crystal nucleating agent.

The crystallization peak temperature of the polylactic acid as a single substance is not observed under the measurement condition specified in the present invention, namely, under the temperature increase at a rate of 20°C/min with a differential scanning calorimeter. Addition of the polylactic acid-based copolymer to the polylactic acid results in an observation of the crystallization peak temperature at a relatively higher temperature. The crystallization peak temperature can be decreased in the following manner to enable the crystallization peak temperature to be controlled so as to fall within a range from 60 to 120°C. Specifically, increase of the mixing amount of the polylactic acid-based copolymer decreases the crystallization peak temperature. Additionally, use of the polylactic acid-based copolymer higher in the compatibility with the polylactic acid and higher in crystallinity also decreases the crystallization peak temperature. Use of the crystal nucleating agent decreases the crystallization peak temperature according to the addition amount thereof. For the purpose of setting the crystallization peak temperature to fall within the above-described range, the above-described techniques may be appropriately combined to regulate the crystallization peak temperature.

The heat quantity of crystallization less than 10 J/g means the progress of the crystallization in the state of the sheet or the low crystallinity of the sheet. The crystallization having progressed results in a poor deep-draw moldability, and the slow crystallization rate results in a too long crystallization time as described above so as to make poor the practicability of the molding. Accordingly, the heat quantity of crystallization is preferably 15 to 25 J/g.

The heat quantity of crystallization can be regulated by the same techniques as in the above-described case of the crystallization peak temperature. As an additional case, the heat quantity of crystallization can be decreased by applying below-described treatments such as heating and stretching to the sheet before molding so as to partially crystallize the composition.

The melting point is required to be 160°C or higher; the melting point lower than 160°C results in a poor heat resistance.

When the heat quantity of crystal fusion is less than 15 J/g, the crystallization degree is low, and the heat resistance is poor even after crystallization. On the other hand, when the heat quantity of crystal fusion exceeds 40 J/g, the molded article tends to be embrittled or tends to be whitened after crystallization. Accordingly, the heat quantity of crystal fusion is preferably 20 to 35 J/g.

The melting point and the heat quantity of crystal fusion are regulated by the respective melting points of the polylactic acid and the polylactic acid-based copolymer, by the mixing ratio between these two polymers and by others. Particularly important is the selection of the polylactic acid serving as the main component, and the mixing ratio or the copolymerization ratio between the D-lactic acid component and the L-lactic acid component regulates the melting point or the heat quantity of crystal fusion.

The polylactic acid based heat-resistant sheet of the present invention has a shortest semi-crystallization time of preferably less than 100 seconds and particularly preferably less than 50 seconds as measured with a differential scanning calorimeter in an isothermal crystallization measurement mode. When the shortest semi-crystallization time is 100 seconds or more, even a crystallization treatment in a temperature region corresponding to the shortest semi-crystallization time tends to whiten the sheet. The regulation of the shortest semi-crystallization time as measured with a differential scanning calorimeter in an isothermal crystallization measurement mode can be conducted by regulating the compatibility between the polylactic acid and the polylactic acid-based copolymer, the mixing ratio between these two polymers, and the molecular weight, the glass transition temperature and the crystallinity of the polylactic acid-based copolymer. Additionally, the effects of the type and the addition amount of the crystal nucleating agent are large; in particular, an amide crystal nucleating agent having at least one hydroxyl group can increase, with a small amount, the crystallization rate, and hence the use of such a crystal nucleating agent makes it easy to allow the shortest semi-crystallization time to be 100 seconds or less.

In the polylactic acid based heat-resistant sheet of the present invention, the temperature range in which the semi-crystallization time is less than 100 seconds falls in a temperature range of preferably 30°C or higher and particularly preferably 40°C or higher. In other words, the increase of the crystallization rate in the temperature range lower than the melting point of the resin composition is effective for the suppression of the whitening after the crystallization.

The crystallization properties of the polylactic acid based heat-resistant sheet of the present invention can be regulated by subjecting before molding the sheet to a preliminary crystallization or to a preliminary stretching.

The preliminary crystallization can reduce the time taken for the crystallization necessary at the time of molding. Specifically, an extrusion molded sheet is preferably subjected to a preliminary crystallization before the step of molding under the conditions that the crystallization temperature is 50 to 80°C and the crystallization duration is 5 to 30 seconds. Although the preliminary crystallization decreases the heat quantity of crystallization during the temperature increase, the heat quantity of crystallization is required to be 10 J/g or more under the conditions before the molding.

The preliminary stretching conditions are preferably such that the stretching temperature is 50 to 80°C and the stretching magnification is 1.05-fold to 2.0-fold. The preliminary stretching of the sheet increases the crystallization rate of the sheet and the crystallization is made to progress depending on the conditions. The heat quantity of crystallization under the conditions before the molding is required to be 10 J/g or more. When the enthalpy of crystallization is less than 10 J/g, the moldability tends to be degraded. The application of the above-described preliminary stretching conditions makes it easy to regulate the heat quantity of crystallization of the sheet to fall within a range from 10 to 25 J/g.

Hereinafter, the molding of the sheet of the present invention is described.

The method of molding the sheet of the present invention is not particularly limited; however, any of the following molding methods is preferable: vacuum molding, air pressure molding, vacuum air pressure molding and press molding. In advance of the molding, it is required to heat the sheet with a hot plate or hot air. As the method for such heating, it is preferable to conduct indirect, hot air heating because the hot plate method brings the sheet in direct contact with the hot plate and hence the surface condition of the hot plate is transferred to the sheet to impair the transparency of the molded article as the case may be.

Specifically, the sheet is heated with a hot plate or hot air at the temperatures falling within a rage from the glass transition temperature of the resin composition plus 20°C to the glass transition temperature plus 60°C for 10 to 60 seconds to soften and to partially crystallize the sheet, and thereafter the sheet is subjected to a shaping by using a method such as application of vacuum or air pressure. In this shaping, when the heating temperature is too low, the softening is insufficient and no shaping can be conducted. On the other hand, when the heating temperature is too high or the heating time is too long, the crystallization of the sheet is made to progress to an excessive extent to degrade the shapability. With the mold temperature at the time of molding set at a temperature of the glass transition temperature of the resin composition or lower, the release from the mold may be conducted immediately after the shaping; however, preferably the mold temperature is set to fall in a range from 80 to 130°C where substantially the polylactic acid composition is crystallized most easily, so as for the crystallization to be conducted in the mold. In this case, a more preferable temperature range is from 90 to 120°C. When the mold temperature is lower than 80°C, the crystallization of the polylactic acid composition does not progress. On the other hand, when the heat treatment temperature exceeds 130°C, the crystallization rate of the polylactic acid is made extremely slow and there also occurs a fear that the crystal is melted because the temperature gets closer to the melting point of the polylactic acid; accordingly, the hardening through crystallization is delayed, and it takes time to attain the rigidity required for release from the mold.

The molded article obtained by using the polylactic acid based heat-resistant sheet of the present invention preferably has a crystallization index falling within a range from 20 to 35 J/g. By adopting such a molding method as described above, the crystallization index of the molded article can be made to fall within this range. With the crystallization index falling within this range, an appropriate heat resistance and an appropriate transparency can be imparted to the molded article.

A polylactic acid molded article based on the present invention is described by taking an example as follows. For example, the polylactic acid molded article based on the present invention can be used for various containers, various trays and the like for which conventional polylactic acid molded articles have been difficult to use because of insufficient heat resistance, and further, the polylactic acid molded article based on the present invention can be preferably used for container lids, blister packs, clear cases and the like required to have transparency.

Examples

Hereinafter, the present invention is specifically described with reference to Examples.

In following Examples and Comparative Examples, the basic ingredients for sheets and the measurement methods of the values of the properties of the sheets are as follows.

[Basic ingredients for sheets]

(A. Polylactic acids)

PLA-1: (trade name: 4032D, manufactured by NatureWorks LLC) D-isomer content: 1.2% by mole, residual lactide content: 0.2% by mass, weight average molecular weight: 200,000.

PLA-2: (trade name: 4060D, manufactured by NatureWorks LLC) D-isomer content: 10.5% by mole, residual lactide content: 0.2% by mass, weight average molecular weight: 200,000.

(B. Polylactic acid-based copolymer)

CPLA-1: (trade name: Plamate PD-150, manufactured by Dainippon Ink and Chemicals, Inc.) lactic acid component: 50% by mole, melting point: 165°C, glass transition temperature: 52°C.

CPLA-2: (trade name: Plamate PD-350, manufactured by Dainippon Ink and Chemicals, Inc.) lactic acid component: 50% by mole, melting point: 157°C, glass transition temperature: 18°C.

(C. Crystal nucleating agent)

EA-1: Ethylene-bis-lauric acid amide (trade name: Slipax L, manufactured by Nippon Kasei Chemical Co., Ltd.)
EA-2: Ethylene-bis-12-hydroxystearic acid amide (trade name: A-S-A T-530SF, manufactured by Itoh Oil Chemicals Co., Ltd.)

[Measurement methods of property values of sheets]

(A. Crystallization properties)

A differential scanning calorimeter (trade name Pyris 1 DSC, manufactured by PerkinElmer Corp.) was used; while 10 mg of a sheet specimen was being increased in temperature at a temperature increase rate of 20°C/min, the glass transition temperature (Tg), crystallization peak temperature (Tc), heat quantity of crystallization (ΔHc), melting point (Tm) and heat quantity of crystal fusion (ΔHm) of the sheet specimen were measured.

(B. Crystallization index)

From the results of the above-described measurements of A. crystallization properties, the crystallization index was derived on the basis of the following formula (1):

$$\text{Crystallization index} = \left|\Delta Hm\right| - \left|\Delta Hc\right| \ (J/g) \qquad (1)$$

(C. Shortest semi-crystallization time)

The differential scanning calorimeter (trade name Pyris 1 DSC, manufactured by PerkinElmer Corp.) was used; 10 mg of a sheet specimen was increased in temperature up to a predetermined temperature at a temperature increase rate of 500°C/min, and the crystallization time was measured while the specimen was being maintained at the predetermined temperature. The measurement was conducted over a range from 80°C to 140°C at intervals of 5°C; the shortest semi-crystallization time was obtained as the time required for reaching the peak at the temperature at which the crystallization was fastest.

(D. Heat resistance)

[Heat resistance of sheets]

A sheet specimen was secured to a 12 cm x 12 cm stainless steel framework, and subjected to a heat crystallization treatment in a hot air dryer under the conditions specified in Table 1. The central portion of the thus crystallized sheet specimen was cut to form cross-shaped slits being each 7 cm in length, and the sheet specimen was retained in a horizontal position for 2 hours in the hot air dryer. Under such conditions, the heat resistance was evaluated according to the following standards.
E (excellent): At 90°C no deformation was found.
G (good) : At 80°C no deformation was found, but at 90°C a deformation was found in the cut portion.
A (average): At 70°C no deformation was found, but at 80°C a deformation was found in the cut portion.
P (poor): At 70°C a deformation was found in the cut portion.

[Heat resistance of molded articles]

Each of the molded articles obtained by molding sheets with the mold described below was retained with the bottom thereof up in the hot air dryer for 2 hours, and the heat resistance was evaluated according to the following standards.
E (excellent): At 90°C no deformation was found.
G (good): At 80°C no deformation was found, but at 90°C a deformation was found.
A (average): At 70°C no deformation was found, but at 80°C a deformation was found.
P (poor): At 70°C a deformation was found.

(E. Haze)

A haze meter (trade name: NDH 2000, manufactured by Nippon Denshoku Industries Co., Ltd.) was used. The sheets subjected to a heat crystallization treatment in the same manner as in the above-described D., and the central bottom portion of each of the molded articles in Examples 6 to 8 were subjected to a haze value (%) measurement and were evaluated according to the following standards.

E (excellent): Less than 15%.

G (good): 15% or more and less than 25%.

A (average): 25% or more and less than 35%.

P (poor): 35% or more.

(F. Molding workability)

By using a hot-plate air-pressure molding machine and an aluminum mold (HMR-3B), containers of 230 mm in length, 200 mm in breadth and 24 mm in depth were molded under the heating conditions specified in Table 2 and the molding workability of each of the containers was evaluated according to the following standards.

G (good): The shape of the mold was definitely transferred to the molded article, and additionally no deformation at the time of release occurred.

A (average): The shape of the mold was definitely transferred to the molded article, but some deformation at the time of release occurred.

P (poor): The shape of the mold was not definitely transferred to the molded article.

(Example 1)

A mixture composed of 80% by mass of above-described PLA-1 and 20% by mass of above-described CPLA-2 was melt extruded at an extrusion temperature of 225°C with a single screw extruder having a screw diameter of 90 mm, and brought into close contact with a cast roll set at 20°C to yield a 300-$\mu$m thick unstretched sheet. The details of the sheet obtained thus and the property values thereof are shown in Table 1.

(Examples 2 to 7 and Comparative Examples 1 to 6)

In each of Examples 2 to 7 and Comparative Examples 1 to 6, a sheet was obtained in the same manner as in Example 1 except that the basic ingredient resins and the crystal nucleating agent were changed as shown in Table 1 as compared to Example 1. The crystal nucleating agent was added in a form of a master chip. The master chip was prepared as follows: a mixture of 90% by mass of the polylactic acid and 10% by mass of the crystal nucleating agent was prepared by dry blending; the master chip was obtained by melt kneading the mixture with a double screw extruder having a screw diameter of 30 mm$\phi$ under the conditions that the extrusion temperature was 190°C, the screw rotation number was 150 rpm and the discharge rate was 100 g/min. The details of the sheets obtained thus and the property values of the sheets are shown in Table 1.

It is to be noted herein that the sheets in Table 1 are given the sheet numbers S-1 to S-14, respectively.

(Comparative Example 7)

With the same composition as in Example 1, a 600-$\mu$m thick unstretched sheet was obtained. The sheet was heated at 80°C for 1 minute in a batch stretching machine, and thereafter subjected to a uniaxial direction twofold stretching treatment to yield a 300-$\mu$m thick stretched sheet. The details of the sheet after the stretching and the property values of the sheet are shown in Table 1.

(Examples 8 to 16 and Comparative Examples 8 to 14)

The sheets S-1 to S-14 respectively obtained in Examples 1 to 7 and Comparative Examples 1 to 7 were molded by using the above-described mold under the heating conditions specified in Table 2. The results thus obtained are shown in Table 2.

[Table 1]

| | | Examples | | | | | | | Comparative Examples | | | | | | |
|---|---|---|---|---|---|---|---|---|---|---|---|---|---|---|---|
| | | 1 | 2 | 3 | 4 | 5 | 6 | 7 | 1 | 2 | 3 | 4 | 5 | 6 | 7 |
| Polylactic acid | Type | PLA-1 | PLA-1 | PLA-1 | PLA-1 | PLA-1/ PLA-2 | PLA-1 | PLA-1 | PLA-1 | PLA-1 | PLA-1/ PLA-2 | PLA-1 | PLA-1 | PLA-1 | PLA-1 |
| | Content (% by mass) | 80 | 80 | 85 | 70 | 65/15 | 79.7 | 84 | 96 | 90 | 30/50 | 100 | 100 | 99 | 80 |
| Copolymer | Type | CPLA-2 | CPLA-2/CPLA-1 | CPLA-2 | CPLA-2 | CPLA-2/CPLA-1 | CPLA-2 | CPLA-2/ CPLA-1 | CPLA-2 | CPLA-1 | CPLA-2/ CPLA-1 | - | - | - | CPLA-2 |
| | Content (% by mass) | 20 | 15/5 | 15 | 30 | 15/5 | 20 | 12/3 | 4 | 10 | 15/5 | - | - | - | 20 |
| Crystal nucleating agent | Type | - | - | - | - | - | EA-2 | EA-2 | - | - | - | - | - | RA-1 | - |
| | Content (% by mass) | - | - | - | - | - | 0.3 | 1 | - | - | - | - | - | 1 | - |

(continued)

| | | Examples | | | | | | | Comparative Examples | | | | | | |
|---|---|---|---|---|---|---|---|---|---|---|---|---|---|---|---|
| | | 1 | 2 | 3 | 4 | 5 | 6 | 7 | 1 | 2 | 3 | 4 | 5 | 6 | 7 |
| Sheet | Sheet Number | S-1 | S-2 | S-3 | S-4 | S-5 | S-6 | S-7 | S-8 | S-9 | S-10 | S-11 | S-12 | S-13 | S-14 |
| | Glass transition Glass transition temperature (°C) | 51 | 52 | 55 | 49 | 51 | 50 | 56 | 59 | 58 | 49 | 61 | 61 | 60 | 50 |
| | Crystallization peak temperature (°C) | 93 | 105 | 116 | 88 | 109 | 84 | 88 | 129 | 122 | 115 | - | - | 113 | 90 |
| | Heat quantity of crystallization (J/g) | 20 | 22 | 24 | 19 | 15 | 21 | 25 | 18 | 23 | 11 | - | - | 23 | 5 |
| | Melting point (°C) | 168 | 167 | 169 | 165 | 164 | 165 | 165 | 168 | 167 | 160 | 165 | 165 | 168 | 168 |
| | Heat quantity of crystal fusion (J/g) | 33 | 32 | 34 | 27 | 22 | 33 | 35 | 33 | 29 | 14 | 4 | 4 | 37 | 34 |
| | Shortest semi-crystallization time (sec) | 18 | 22 | 35 | 15 | 32 | 15 | 14 | 125 | 49 | 36 | >300 | >300 | 31 | <10 |

(continued)

| | | Examples | | | | | | | Comparative Examples | | | | | | |
|---|---|---|---|---|---|---|---|---|---|---|---|---|---|---|---|
| | | 1 | 2 | 3 | 4 | 5 | 6 | 7 | 1 | 2 | 3 | 4 | 5 | 6 | 7 |
| Crystalliz ed sheet | Heating temperature (°C) | 100 | 110 | 120 | 100 | 110 | 95 | 95 | 130 | 120 | 120 | 120 | 130 | 120 | 100 |
| | Heating time (sec) | 30 | 30 | 30 | 30 | 30 | 20 | 20 | 30 | 30 | 30 | 30 | 180 | 30 | 30 |
| | Crystallization index (J/g) | 28 | 30 | 31 | 28 | 24 | 27 | 32 | 10 | 14 | 13 | 3 | 28 | 25 | 35 |
| | Haze [300 $\mu$m] | E | G | G | E | E | E | E | P | A | G | G | P | P | G |
| | Heat resistance | E | E | E | E | G | E | E | P | P | P | P | E | A | E |

[Table 2]

| | | Examples | | | | | | | | | Comparative Examples | | | | | | |
|---|---|---|---|---|---|---|---|---|---|---|---|---|---|---|---|---|---|
| | | 8 | 9 | 10 | 11 | 12 | 13 | 14 | 15 | 16 | 8 | 9 | 10 | 11 | 12 | 13 | 14 |
| Sheet number | | S-1 | S-1 | S-1 | S-2 | S-3 | S-4 | S-5 | S-6 | S-7 | S-8 | S-9 | S-10 | S-11 | S-12 | S-13 | S-14 |
| Molded article | Hot plate heating temperature (°C) | 90 | 90 | 90 | 100 | 110 | 90 | 110 | 90 | 95 | 120 | 120 | 110 | 120 | 120 | 120 | 80 |
| | Hot plate heating time (sec) | 30 | 40 | 30 | 30 | 20 | 20 | 30 | 20 | 15 | 30 | 30 | 30 | 120 | 120 | 30 | 30 |
| | Mold temperature (°C) | 90 | 70 | 60 | 100 | 110 | 90 | 100 | 85 | 85 | 120 | 120 | 100 | 40 | 40 | 120 | 40 |
| | Mold retention time (see) | 20 | 10 | 10 | 30 | 20 | 10 | 40 | 10 | 10 | 120 | 120 | 120 | 10 | 10 | 60 | 10 |
| | Moldability | G | G | G | G | G | G | G | G | G | A | A | A | G | G | G | P |
| | Crystallization index (J/g) | 35 | 26 | 22 | 35 | 33 | 30 | 24 | 28 | 35 | 12 | 19 | 12 | 4 | 4 | 35 | 36 |
| | Haze [300 $\mu$m] | G | E | E | G | G | E | G | E | E | G | A | G | G | G | P | - |
| | Heat resistance | E | G | A | E | E | G | G | E | E | P | P | P | P | P | G | - |

The sheets of Examples 1 to 7 were able to be crystallized by applying a heat treatment at 95°C to 120°C for 20 to 30 seconds, and the thus obtained sheets were relatively transparent and each had a heat resistance of 80°C or higher.

In Examples 8 to 10, the molded articles were obtained by using the sheet prepared in Example 1 and by varying the molding conditions. Among the molded articles, the molded article of Example 6 high in the crystallization index of the molded article was somewhat degraded in transparency but was excellent in heat resistance; on the other hand, the molded article of Example 8 low in crystallization index was somewhat poor in heat resistance but excellent in transparency; and the molded article of Example 7 was somewhat degraded in heat resistance but was excellent in transparency.

In Examples 11 to 14, the molded articles were obtained by using the sheets of Examples 2 to 5, respectively. These molded articles were excellent both in transparency and in heat resistance.

In Examples 15 and 16, the molded articles were obtained by using the sheets of Examples 6 and 7, respectively. Of Examples 15 and 16, Example 15 was shorter in molding cycle than Examples 8 to 10 in each of which no crystal nucleating agent was used; and Example 16 was shortest in molding cycle among Examples 8 to 16. These Examples 15 and 16 were each satisfactory both in the transparency and in the heat resistance of the molded article. It is to be noted herein that the molding cycle means the sum of the hot plate heating time and the mold retention time.

The sheet of Comparative Example 1 was small in the addition amount of the polylactic acid-based copolymer, and consequently the crystallization peak temperature of the resin composition was high and the crystallization rate of the resin composition was slow. Consequently, even with the heat treatment conducted at 130°C for 30 seconds, no heat resistance was attained and the haze was poor.

The sheet of Comparative Example 2 was high in the crystallization peak temperature of the resin composition, and consequently was low in crystallization index and poor in heat resistance even with the heat treatment conducted at 120°C for 30 seconds.

The sheet of Comparative Example 3 was large in the content of PLA-2, an amorphous polylactic acid, and small in the heat quantity of crystal fusion of the resin composition, and consequently was poor in heat resistance even after the crystallization through the heat treatment.

The sheet of Comparative Example 4 did not contain the polylactic acid-based copolymer and hence the crystallization rate was remarkably slow and almost no crystallization was found with a practical molding cycle of 30 seconds, and consequently, the sheet of Comparative Example 4 was excellent in transparency but poor in heat resistance.

The sheet of Comparative Example 5 was obtained through the crystallization conducted by applying to the same sheet as in Comparative Example 4 a heat treatment at 130°C for 180 seconds, and consequently had a heat resistance but was remarkably poor in transparency. Additionally, the sheet of Comparative Example 5 was poor in practicability with a molding cycle of 180 seconds.

The sheet of Comparative Example 6 contained, as the crystal nucleating agent added thereto, ethylene-bis-lauric acid amide (EA-1), but was poor both in the heat resistance and in the transparency after the crystallization through a heat treatment conducted at 120°C for 30 seconds.

The sheet of Comparative Example 7 was low in the heat quantity of crystallization thereof, and consequently was excellent in both the heat resistance and the transparency attained by applying a heat treatment at 100°C for 30 seconds. However, the crystallization index of the sheet of Example 7 prior to the molding was high, and consequently the sheet of Example 7 was poor in the workability at the time of the molding in which the sheet was softened once again in Comparative Example 14. In other words, in Comparative Example 14, no molded article having a predetermined depth was obtained. Consequently, the heat resistance and the transparency were not evaluated.

In each of Comparative Examples 8 and 9, for the purpose of crystallizing the molded article in the mold, a heat treatment was applied at 120°C for 120 seconds to the molded article while the molded article was being retained in the mold; however, the molded article thus obtained was low in crystallization index and poor in heat resistance; and at the time of release from the mold, a deformation of the molded article was found, and additionally, in Comparative Example 9, the transparency of the molded article was poor.

In Comparative Example 10, a heat treatment was applied at 100°C for 120 seconds to the molded article while the molded article was being retained in the mold, the temperature of 100°C being the highest temperature enabling the release of the molded article from the mold. However, the molded article thus obtained was low in crystallization index and poor in heat resistance. Although the heat treatment temperature was 100°C, some deformation was found in the molded article at the time of release from the mold.

In each of Comparative Examples 11 and 12, when a method of crystallization in the mold was applied, no temperature to enable the release of the molded article was able to be found; consequently, the molded article was released from the mold at a mold temperature decreased down to 40°C; however, the molded article thus obtained was low in crystallization index and poor in heat resistance.

In Comparative Example 13, for the purpose of crystallization in the mold, a heat treatment was applied at 120°C for 60 seconds. Consequently, the crystallization index was found to be high and the heat resistance was found to be improved. However, the heat treatment temperature was too high, and consequently, the transparency of the molded article was poor.

## Claims

1. A polylactic acid based heat-resistant sheet comprising:

    50 to 95% by mass of a polylactic acid; and
    5 to 50% by mass of a polylactic acid-based copolymer containing 30 to 70 % by mole of a lactic acid component, wherein the polylactic acid based heat-resistant sheet has a crystallization peak temperature of 60 to 120°C, a heat quantity of crystallization of 10 to 25 J/g, a melting point of 160°C or higher and a heat quantity of crystal fusion of 15 to 40 J/g, as measured with a differential scanning calorimeter at a temperature increase rate of 20°C/min.

2. The polylactic acid based heat-resistant sheet according to claim 1, comprising:

    50 to 85% by mass of the polylactic acid; and
    15 to 50% by mass of the polylactic acid-based copolymer containing 30 to 70 % by mole of the lactic acid component.

3. The polylactic acid based heat-resistant sheet according to claim 1, wherein a shortest semi-crystallization time of the polylactic acid based heat-resistant sheet is less than 100 seconds.

4. The polylactic acid based heat-resistant sheet according to claim 1, comprising:

    the polylactic acid;
    the polylactic acid-based copolymer containing 30 to 70 % by mole of the lactic acid component; and
    0.1 to 5% by mass of an amide crystal nucleating agent having at least one hydroxyl group,
    wherein a total amount is 100% by mass.

5. A molded article obtained by molding the polylactic acid based heat-resistant sheet according to any one of claims 1 to 4, wherein a crystallization index of the molded article is 20 to 35 J/g.

## INTERNATIONAL SEARCH REPORT

| International application No. |
| --- |
| PCT/JP2007/061051 |

A. CLASSIFICATION OF SUBJECT MATTER
*C08L67/04*(2006.01)i, *C08J5/18*(2006.01)i, *C08L101/16*(2006.01)n

According to International Patent Classification (IPC) or to both national classification and IPC

B. FIELDS SEARCHED

Minimum documentation searched (classification system followed by classification symbols)
C08L67/00-67/04, C08J5/18, C08L101/16, C08K5/20

Documentation searched other than minimum documentation to the extent that such documents are included in the fields searched
Jitsuyo Shinan Koho             1922-1996   Jitsuyo Shinan Toroku Koho   1996-2007
Kokai Jitsuyo Shinan Koho       1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2006-16605 A  (Mitsubishi Plastics, Inc.),<br>19 January, 2006 (19.01.06),<br>Claims; Par. Nos. [0020] to [0040], [0051],<br>[0056] to [0061]; examples<br>(Family: none) | 1-3,5<br>4 |
| X<br>Y | JP 2002-292665 A  (Dainippon Ink And Chemicals, Inc.),<br>09 October, 2002 (09.10.02),<br>Claims; Par. Nos. [0056] to [0068], [0084] to [0105]; examples<br>(Family: none) | 1-3,5<br>4 |

[X] Further documents are listed in the continuation of Box C.      [ ] See patent family annex.

| | |
| --- | --- |
| *     Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    25 July, 2007 (25.07.07) | Date of mailing of the international search report<br>    07 August, 2007 (07.08.07) |
| --- | --- |
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2007/061051 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>Y | JP 2002-167497 A  (Dainippon Ink And Chemicals, Inc.),<br>11 June, 2002 (11.06.02),<br>Claims; Par. Nos. [0063] to [0078], [0112] to [0129]; examples<br>(Family: none) | 1-3,5<br>4 |
| X<br>Y | JP 2006-45300 A  (Sekisui Seikei, Ltd.),<br>16 February, 2006 (16.02.06),<br>Claims; Par. Nos. [0014] to [0017]; examples<br>(Family: none) | 1-3,5<br>4 |
| X<br>Y | JP 11-124495 A  (Mitsubishi Plastics, Inc.),<br>11 May, 1999 (11.05.99),<br>Claims; Par. Nos. [0016] to [0023], [0027]; examples<br>(Family: none) | 1-3,5<br>4 |
| Y | JP 2004-359828 A  (Toyota Motor Corp.),<br>24 December, 2004 (24.12.04),<br>Claims; Par. Nos. [0038] to [0039]; examples<br>(Family: none) | 4 |
| P,X | JP 2007-91769 A  (Mitsubishi Plastics, Inc.),<br>12 April, 2007 (12.04.07),<br>Claims; Par. Nos. [0015] to [0031], [0042] to [0043]; examples<br>(Family: none) | 1-3,5 |
| P,X | JP 2007-16091 A  (Toray Industries, Inc.),<br>25 January, 2007 (25.01.07),<br>Claims; Par. Nos. [0019] to [0020], [0029] to [0030]; examples<br>(Family: none) | 1-3,5 |
| P,X | JP 2006-335904 A  (Tohcello Co., Ltd.),<br>14 December, 2006 (14.12.06),<br>Claims; Par. Nos. [0009] to [0020], [0023] to [0034]; examples<br>(Family: none) | 1-3,5 |

Form PCT/ISA/210 (continuation of second sheet) (April 2005)

**EP 2 025 713 A1**

**REFERENCES CITED IN THE DESCRIPTION**

**Patent documents cited in the description**

- JP 2003253009 A
- JP 9278991 A
- JP 2001162676 A
- JP 2003345150 A
- JP 2004345150 A